# EUROPEAN PATENT APPLICATION

(11) **EP 4 675 119 A1**
(43) Date of publication of application: **07.01.2026**
(21) Application number: 24382713.6
(22) Date of filing: 02.07.2024
(51) Int. Cl.: F16C 35/063, F16C 19/28, F16C 23/08

(54) **SPLIT CLAMPING RING**

(71) Applicant: Siemens Gamesa Renewable Energy Innovation & Technology S.L., 31621 Sarriguren (Navarra) (ES)
(72) Inventor: Durand, Mickael, 31620 Gorraiz (ES)
(74) Representative: SGRE-Association

(57) **Abstract**

The invention describes a split clamping ring (1) for placing about a wind turbine drivetrain shaft (20), which split clamping ring (1) comprises a number of ring sections (1R), each with the form of a circular arc, and wherein adjacent ring sections (1R) comprise bores (104, 106) to receive a transverse threaded fastener (1F); and a number of spacer assemblies (1S), each with the form of a circular arc; and wherein each spacer assembly (1S) comprises an inner spacer part (11) and an outer spacer part (13) shaped to fit between opposing end faces (101, 103) of adjacent ring sections (1R) and to accommodate the shaft of a transverse threaded fastener (1F). The invention further describes a main bearing unit (2) of a wind turbine drivetrain, comprising such a split clamping ring (1) mounted about its main shaft (20) to abut a bearing (21); and a method of assembling such a main bearing unit (2).

## Description

### Background

In a commonly used configuration, a wind turbine drivetrain comprises a low-speed shaft ("main shaft") which is turned by the aerodynamic rotor (usually three rotor blades mounted to a hub). The downwind end of the low-speed shaft turns the first stage of a gearbox. Usually, the low-speed shaft is part of a main bearing unit comprising a bearing about the upwind end ("drive end") of the shaft and another bearing about the downwind ("non-drive end") of the shaft. In a known four-point suspension, each bearing can be realised as a double-row spherical roller bearing, for example in an "0" configuration. Each bearing is held between the shaft and a main bearing housing, which can be mounted to a bedplate in the wind turbine nacelle, so that the main bearing unit effectively transfers loads from the main shaft via the bearings, housing and bedplate into the tower.

In such a four-point suspension, each bearing comprises two sets of rollers contained between an inner ring and an outer ring. The inner ring of a bearing fits tightly about the main shaft, and the outer ring fits tightly against the inside of the main bearing housing. Various means can be deployed to prevent axial displacement of the bearing rings during operation of the wind turbine. Usually, a floating bearing configuration is implemented at the drive end of the main shaft. For example, the inner ring is placed to abut a shoulder (protruding radially from the main shaft), and is held axially by an axial fixing means such as a shaft nut (which is expensive to manufacture) or a more economical press-fit ring (which is difficult to install) or a split clamping ring.

In previously installed wind turbines with rotor diameters in the order of 100 m, these features can be sufficient to prevent axial displacement of the bearing ring, since the axial fixing means can cope with the observed main shaft deformations. However, wind turbines with much larger rotor diameters are being developed. The radial and axial loads on the main shaft of such a large wind turbine are correspondingly greater and lead to larger deformations of the main shaft during operation. The deformations can displace a press-fit ring, and can also loosen the fastened joint of a conventional split clamping ring (which simply comprises two halves joined by threaded fasteners). Therefore, the known design solutions are no longer sufficient to reliably prevent axial displacement of a bearing ring. When such a displacement occurs, the wind turbine must be shut down until the lengthy procedure of removing and replacing the main bearing unit is completed, with considerable loss of earnings in addition to the material cost, crane hire cost and, in the case of an offshore wind turbine, the expense of hiring a jack-up vessel.

It is therefore an object of the invention to provide a more reliable way of fixing a bearing about the main shaft of a drivetrain.

This object is achieved by the claimed split clamping ring, by the claimed main bearing unit, and by the claimed method of assembling a main bearing unit.

### Description

The inventive split clamping ring is intended for placing about a wind turbine drivetrain shaft, and its diameter is correspondingly large. For example, the diameter at the drive end of the main shaft of a 4 MW wind turbine can be in the order of 0.9 m - 1.0 m, and a bearing at that end of the shaft will have a similar diameter. When the inventive split clamping ring is installed about the shaft to abut such a bearing, its inner diameter will be essentially the same as the bearing inner diameter.

Ring sections of a clamping ring are connected by means of a transverse fastener, for example a metal screw. To this end, any pair of ring sections shall be understood to be machined accordingly, for example an outer end of one ring section may be formed to have a tapped bore to receive the threaded end of a fastener, while an outer end of the other ring section has a bore shaped to receive and enclose the head of the fastener.

According to the invention, the split clamping ring comprises a number of ring sections, each with the form of a circular arc, and wherein the end faces of adjacent ring sections comprise bores to receive a transverse threaded fastener. The inventive the split clamping ring further comprises the same number of spacer assemblies, each also having the form of a circular arc, and wherein each spacer assembly comprises at least two parts shaped to fit between opposing end faces of adjacent ring sections and to accommodate the shaft of a transverse threaded fastener.

The claimed main bearing unit of a wind turbine drivetrain comprises a number of bearings arranged about a main shaft; a housing arranged to enclose the bearings; and an axial fixation arrangement adapted to maintain the axial position of a bearing about the main shaft. A split clamping ring according to the invention is placed to abut the bearing on one side. Such an axial fixation arrangement can comprise an outwardly protruding shoulder on one side of the bearing. In such a configuration, the inventive split clamping ring is placed to abut the bearing on the other side. In this way, the inventive split clamping ring reliably prevents the bearing from being axially displaced during operation of the wind turbine.

An advantage of the invention is that the split clamping ring is relatively cheap to manufacture, but is highly effective at preventing axial displacement of a bearing. Its effectiveness results from the manner in which the ring sections are joined. A conventional split clamping ring comprises two parts, each in the form of a 180° half circle, joined by transverse fasteners, and the effectiveness of the conventional ring limited by the poor contact between the end faces of the ring sections. Elastic deformation of the shaft during operation of the wind turbine can displace one half-ring slightly relative to the other half-ring, ultimately leading to a loosening of the fasteners.

Instead of simply connecting two half-rings directly by a transverse fastener, the inventor has realised that a significant improvement can be achieved by shortening the ring sections and providing suitably-shaped spacers to completely fill the gap between ring sections, so that the forces acting on a ring section of the clamping ring (as a result of elastic deformation of the shaft) are effectively distributed about the clamping ring and no longer have any detrimental effect on the fasteners, which remain reliably tightened during all operation modes of the wind turbine.

The claimed method of assembling a main bearing unit comprises steps of arranging a number of bearings about a main shaft and arranging a housing about the bearings and the main shaft; and mounting an instance of the inventive split clamping ring about the main shaft to abut a bearing as part of an axial fixation means of that bearing.

Particularly advantageous embodiments and features of the invention are given by the dependent claims, as revealed in the following description. Features of different claim categories may be combined as appropriate to give further embodiments not described herein.

In the following, it may be assumed that the main bearing unit is part of a wind turbine drivetrain in which the main shaft is turned by an aerodynamic rotor, and which in turn is connected to the first stage of a gearbox. Each bearing can be assumed to comprise a double-row spherical roller bearing, held between the shaft and a main bearing housing, which in turn is mounted to a bedplate in the nacelle.

The inventive split clamping ring can comprise two ring sections and two spacers. Equally, the inventive split clamping ring can comprise three ring sections and three spacers, etc. Preferably, the ring sections are essentially identical, and the spacer assemblies are essentially identical.

The spacer parts can have any suitable shape. Preferably, the spacer parts are shaped so that, when the spacer is assembled, it has essentially the same curvature and a similar cross-sectional geometry as a ring section. In a preferred embodiment of the invention, a spacer assembly comprises two halves in the form of a first or "inner" spacer part with a curved lower surface, and a second "outer" spacer part with a curved outer surface. In such an embodiment, the spacer parts essentially complete the annular shape of the split clamping ring.

The spacer assembly is preferably shaped to counter outwardly directed radial forces arising from elastic deformation of the main shaft during operation of the wind turbine. To this end, in a preferred embodiment of the invention, the inner spacer part comprises inclined side faces that taper inward with increasing distance in the radially outward direction, and wherein the end face of a ring section comprises an inclined portion to match the inclined side face of the inner spacer part. Similarly, the outer spacer part comprises inclined side faces that taper inward with increasing distance in the radially inward direction, and wherein the end face of a ring section comprises an inclined portion to match the inclined side face of the outer spacer part. Each spacer part therefore has an essentially trapezoidal shape, and the end faces of each ring section form a wedge.

The spacer serves to "join" adjacent ring sections of the clamping ring, and is shaped to surround the transverse fastener. To this end, in a preferred embodiment of the invention, the upper surface of the inner spacer part and the lower surface of the outer spacer part each comprise a transverse channel shaped to form a passage to receive the fastener shaft with some clearance, for example each transverse channel can have the form of a half-cylinder.

The spacer parts, when joined, complete the spacer assembly. In one approach, the spacer parts can be shaped to form a snap fit connection when the parts are pressed together. In a particularly preferred embodiment of the invention, the spacer parts are joined by threaded fasteners. For example, an arrangement of four threaded fasteners can be used to join the spacer parts. In a preferred embodiment of the invention, the fasteners are orthogonal to the long axis of the transverse fastener, while also being parallel to each other. Bores and tapped bores are preferably formed in the spacer parts so that the spacer fasteners are completely contained within the spacer assembly and do not protrude from the exterior faces of the spacer. When tightened, the spacer fasteners act to pull the spacer parts toward each other. In such an embodiment, the lower surface of the outer spacer and the upper surface of the inner spacer can be essentially planar. The spacer parts can be shaped so that, when joined by the spacer fasteners, their planar surfaces come into contact. Equally, the spacer parts can be shaped so that, when joined by the spacer fasteners, their planar surfaces remain apart. Transfer of loads between adjacent ring sections is effected entirely through a "press-fit" between the matching inclined faces between spacer parts and ring sections, so that the transverse fasteners are reliably prevented from becoming loose during operation of the wind turbine.

The inventive split clamping ring, when assembled, forms an annulus with an inner diameter that is essentially the same as the inner diameter of the bearing against which it will abut. The dimensions of the spacer assembly are determined to some extent by the size of the transverse fastener required to join two ring sections. The dimensions of the fastener depend in turn on the cross-sectional area of a ring section and the curvature of the clamping ring, which in turn depends on the inner diameter of the bearing against which the clamping ring will abut.

When assembling a spacer between two ring sections, the spacer fasteners are tightened to a desired preload force, effectively "pulling" the spacer parts towards each other in the axial direction (of the spacer fasteners). However, the transverse fastener determines the size of the gap between the ring sections, while the inclined side faces of the components place a limit on the axial displacement of the spacer parts. As a result, the inclined side faces of each spacer part are pressed under force against the corresponding inclined side faces of the ring sections. After all fasteners have been tightened to the desired preload, this lateral force ensures that loads are optimally transferred between the ring sections.

The clamping ring can be made of any suitable material(s). Preferably, the ring sections and spacer parts are made of structural steel, hardened steel, etc. With the inventive split clamping ring in place against a bearing, the axial position of the bearing can be satisfactorily maintained throughout the service life of the main bearing unit. The dimensions of the inventive split clamping ring and the quality of the material and the fasteners are chosen to ensure that all fasteners can be tightened to the required preload.

In a further preferred embodiment of the invention, the effectiveness of the inventive split clamping ring can be augmented by placing a friction shim between the split clamping ring and the main shaft. Equally, the effectiveness of the inventive split clamping ring can be augmented by placing a tapered sleeve between the split clamping ring and the main shaft. Alternatively, the effectiveness of the inventive split clamping ring can be augmented by forming an inner thread on the ring sections, and forming a matching outer thread on the main shaft. Any one of these additional measures can be implemented as appropriate to augment the clamping effect of the inventive split clamping ring.

The inventive split clamping ring can be installed once the bearing has been put into place on the main shaft. The step of installing the clamping ring can be done at the manufacturing facility. However, it can be preferable to install the clamping ring after hoisting the main bearing unit into the wind turbine nacelle. The ring sections can easily be lifted into the interior of the housing through service hatches provided in the main bearing unit housing.

The clamping ring is installed by: placing ring sections of the split clamping ring about the main shaft; assembling a spacer of the split clamping ring in the gap between each pair of adjacent ring sections; inserting a transverse threaded fastener through the bore of a ring section, through the spacer assembly, and into the bore of the adjacent ring section; and tightening the transverse threaded fastener to a desired preload. The spacer parts are then joined, for example by tightening each of four fasteners. The spacer fasteners and the ring section fastener can be tightened in stages, alternating between the spacer fasteners and the ring section fastener, until the desired preloads are reached. After tightening of all fasteners, the forced contact at the inclined side faces between each spacer and its ring sections ensures optimal transfer of loads between the ring sections during operation of the wind turbine.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an axial cross-section through a main bearing unit 2 of a wind turbine drivetrain;
Figures 2 - 5 illustrate an embodiment of the inventive split clamping ring;
Figure 6 shows an embodiment with a three-part split clamping ring;
Figures 7 - 9 illustrate further additions to an axial fixation means using the inventive clamping ring;
Figure 10 illustrates a clamping ring 5 known from the prior art.

In the diagrams, like numbers refer to like objects throughout. Objects in the diagrams are not necessarily drawn to scale.

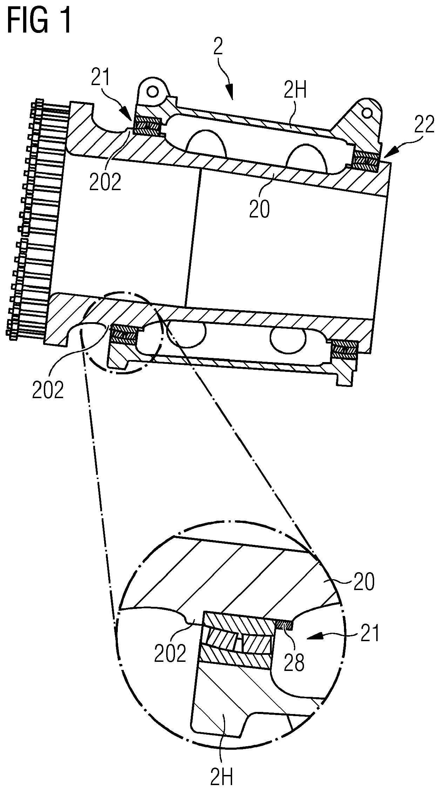

Figure 1 shows an axial cross-section through a main bearing unit 2 of a wind turbine drivetrain. The diagram shows a main shaft 20, a drive end bearing 21, a non-drive end bearing 22, and a housing 2H which is generally mounted to a bedplate. In the enlarged view, the drawing shows how the inner ring of the drive-end bearing 21 fits tightly between a radially protruding shoulder 202 on one side, and a press-fit ring 28 positioned on the other side. In a large wind turbine, the diameter of the main shaft 20 can be in the order of 1 m at its drive end, and the press-fit ring must have the same large inner diameter.

As explained above, the very high radial and axial loads during operation of the wind turbine can result in deformation of the main shaft 20, which can axially displace the press-fit ring, reducing its ability to prevent axial displacement of the bearing inner ring, resulting in costly downtime and repairs. Instead of such a press-fit ring 28, it is known to provide a large-diameter shaft nut and to machine a matching thread about the shaft. The shaft nut can be threaded onto the main shaft 20 to abut against the press-fit ring 1. However, this added measure is expensive to realize and must be installed before the main shaft 20 is arranged in the housing 2H.

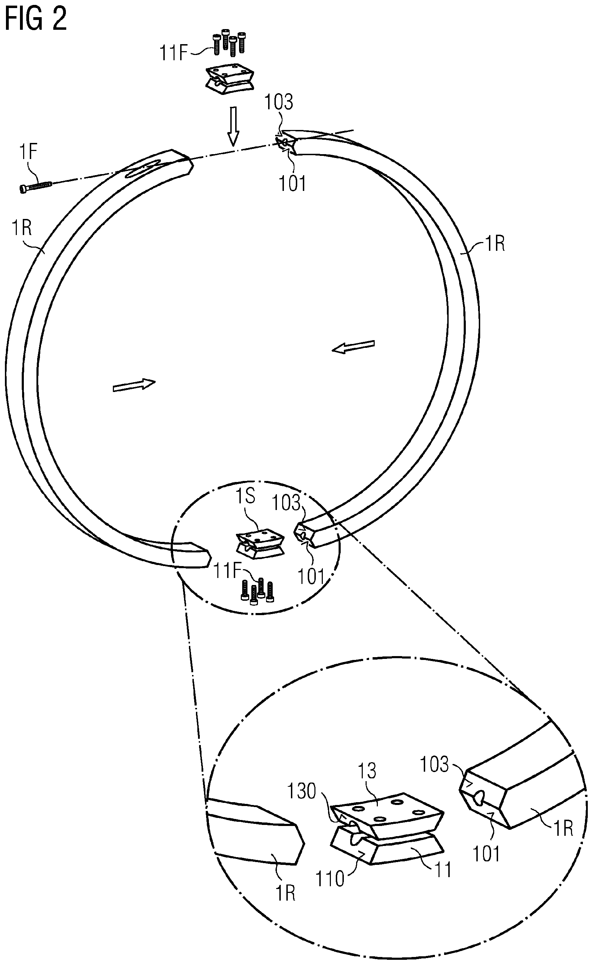

Figures 2 - 7 illustrate the inventive approach to fixing the axial position of a bearing 21, 22 about the main shaft 20.

Figure 2 shows components 1R, 1S of an embodiment of the inventive split clamping ring, prior to assembly. Here, the split clamping ring 1 comprises two ring sections 1R, each of which is shorter than a complete half-ring. For example, each ring section may describe a circular arc of up to 175°, so that the open ends of the clamping ring 1 are separated by a relatively large gap. In a two-part clamping ring 1, there are two such gaps to fill. The ring sections 1R of the inventive split clamping ring 1 are formed to accommodate spacers 1S which can be inserted between the ring sections 1R to complete the circle.

The inventive split clamping ring will be assembled using a transverse fastener 1F between the ends of any two ring sections 1R, and a set of four parallel spacer fasteners 11F for each spacer 1S as indicated in the diagram.

In this exemplary embodiment, each spacer part 11, 13 of a spacer 1S has an essentially trapezoidal shape, with sloping side faces. The enlarged section of the drawing shows the sloping side faces 110 of the trapezoid-shaped inner spacer part 11, which will be pressed under force against the corresponding inclined side faces 101 of the ring sections 1R; and also shows the sloping side faces 130 of the trapezoid-shaped outer spacer part 13, which will be pressed under force against the outer inclined side faces 103 of the ring sections 1R.

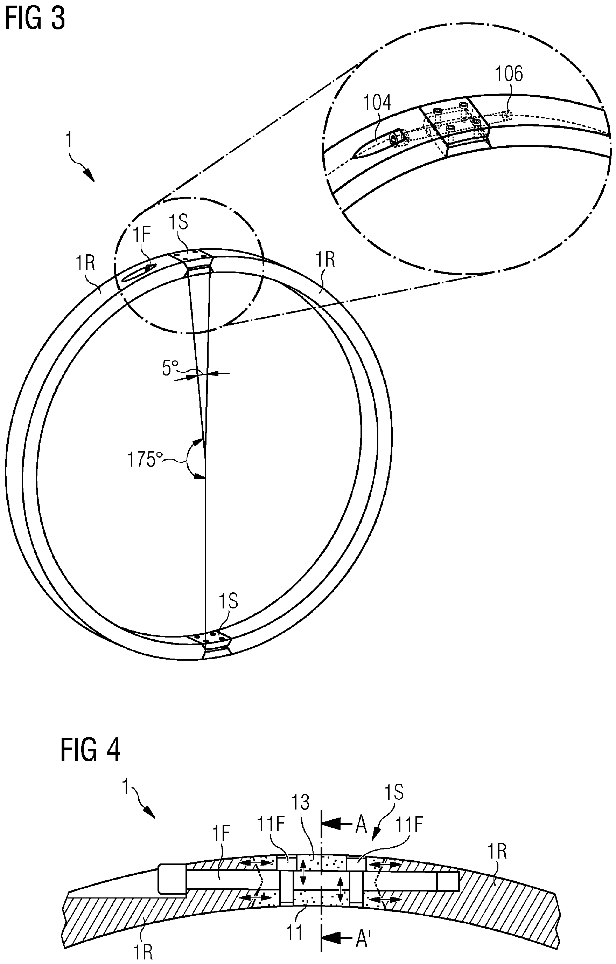

Figure 3 shows the split clamping ring 1 of Figure 2 in its assembled state. After assembling the clamping ring 1 about the main shaft (not shown) and tightening all fasteners 1F, 11F to the desired preload, compression at the mating faces between ring sections 1R and spacers 1S ensures that the parts of the assembled ring 1 collectively subtend an angle of 360°, so that the ring 1 fits tightly about the main shaft. The enlarged portion of Figure 3 shows the arrangement of an inner spacer part 11 and an outer spacer part 13 about a transverse fastener 1F, which is inserted through a bore 104 in one ring section 1R and tightened in a tapped bore 106 of the other ring section 1R.

Assembly of the ring 1 can be done by placing ring sections about the main shaft 20, sliding an inner spacer part 11 into place between two ring sections 1R, inserting the transverse fastener 1F to connect the ring sections 1R, placing the outer spacer part 13 over the inner spacer part 11, and joining the spacer parts 11, 13 using radial spacer fasteners 11F.

The clamping ring 1 is then fully tightened by means of the transverse fastener 1F in each joint. The threaded end of the fastener 1F passes through a bore 104 provided in one ring section 1R and engages with an inner thread or tapped bore formed in the other ring section 1R. The shaft of the fastener 1F passes between the spacer parts 11, 13. The transverse fastener 1F is preferably a socket-head cap screw as shown here, which can be completely contained within the body of the assembled clamping ring 1. The spacer parts 11, 13 are joined using a plurality of inwardly directed fasteners 11F as shown. Each spacer fastener 11F has a threaded end that engages with an inner threaded bore formed in the inner spacer part 11. The head of each spacer fastener 11F is preferably contained in a counterbore formed in the outer spacer part 13 as shown here, to receive a socket-head cap screw.

The transverse fastener 1F can then be turned using an appropriate tightening tool to the desired preload force. Tightening of the transverse fastener 1F and the spacer fasteners 11F can be done alternately until the desired levels of preload force are achieved. Preferably, the transverse fastener 1F is tightened to the desired preload force, and the spacer fasteners 11F are tightened in a final step.

When assembling a spacer 1S between two ring sections 1R, the spacer fasteners 11F are tightened to a desired preload force, effectively "pulling" the spacer parts 11, 13 towards each other in the direction of the spacer fasteners 11F. However, the transverse fastener 1F determines the available space G between the ring sections 1R, while the inclined side faces 110, 130 of the components 1R, 11, 13 effectively limit the axial displacement of the spacer parts 11, 13. As a result, the inclined side faces 110 of the inner spacer part 11 are pressed under force against the inner inclined side faces 101 of the ring sections 1R, while the inclined side faces 130 of the outer spacer part 13 are pressed under force against the outer inclined side faces 103 of the ring sections 1R. After all fasteners 1F, 11F have been tightened to the desired preload, the lateral forces between opposing faces 110, 101; 130, 103 of the spacer parts 11, 13 and ring sections 1R ensure that loads are optimally transferred between the ring sections 1R during all operating modes of the wind turbine.

In the exemplary embodiment shown above, the spacer parts 11, 13 have an essentially trapezoidal shape, and the opposing end faces 101, 103 of each ring section form a wedge. In this exemplary embodiment, forces arising from deformation of the main shaft can be transferred with greater efficiency into the body of the clamping ring 1, while ensuring that the spacer parts 11, 13 cannot be radially displaced relative to the ring sections 1R.

Figure 4 shows a cross-section through a joint of the inventive clamping ring 1. The diagram shows the inner part 11 and outer part 13 of a spacer 1S, and that the sloping side faces 110, 130 of the spacer parts 11, 13 are pressed (as indicated by the arrows) against the sloping side faces 101, 103 of the adjacent ring sections 1R.

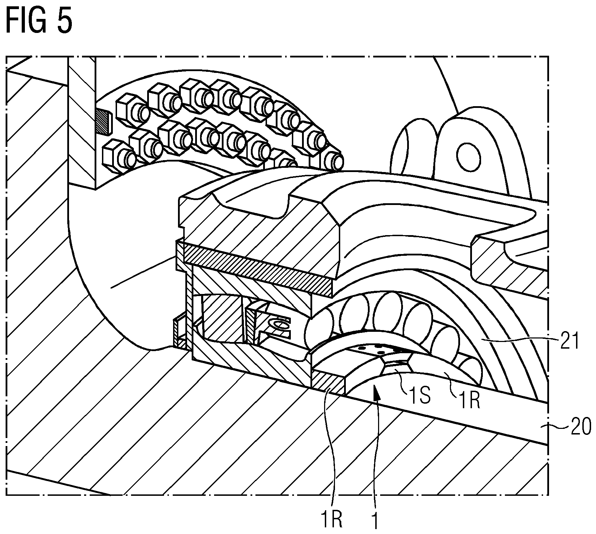

Figure 5 shows the inventive clamping ring 1 in place about the main shaft 20. During operation of the wind turbine, deformation of the main shaft 20 leads to forces acting on the split clamping ring 1. Radial and axial loads in the joint regions of the clamping ring 1 are effectively transferred into the body of the clamping ring 1 on account of the tight fit between the spacer parts 11, 13 and the tight fit between each spacer 1S and the ring sections 1R as shown in Figure 5. This favourable load distribution prevents micro-movements of a transverse fastener 1F in its tapped bore, and ensures that the fastener 1F cannot become loose. The inventive split clamping ring 1 therefore maintains a reliably tight fit about the main shaft 20, and holds the bearing inner ring 1 reliably in place throughout the service life of the main bearing unit 2.

Here, an instance of the inventive clamping ring 1 is used to fix the axial position of the inner ring of the drive end bearing 21. Alternatively or in addition, an instance of the inventive clamping ring 1 can be used to fix the axial position of the inner ring of the non-drive end bearing 22.

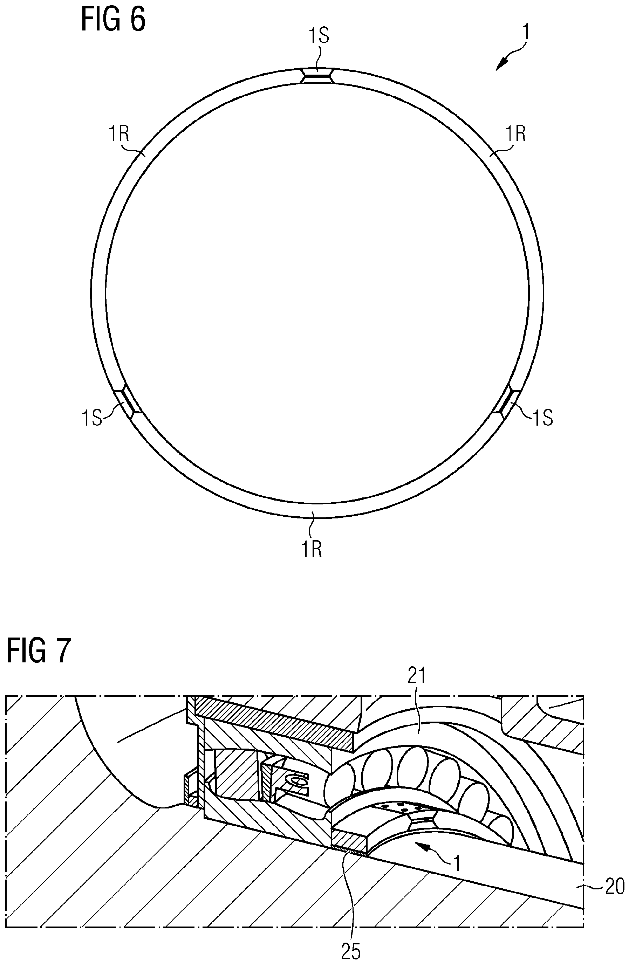

Figure 6 shows an embodiment with a three-part split clamping ring 1, i.e. a clamping ring 1 with three ring sections 1R and three spacer assemblies 1S. Here, each ring section 1R subtends an arc of 115°, and each spacer assembly 1S subtends an arc of 5°.

Figure 7 shows an embodiment in which a friction shim 25 is placed between the inventive clamping ring 1 and the main shaft 20. The friction shim increases the friction coefficient between the mating surfaces of the main shaft and the clamping ring, thereby increasing the radial load capacity of the clamping ring.

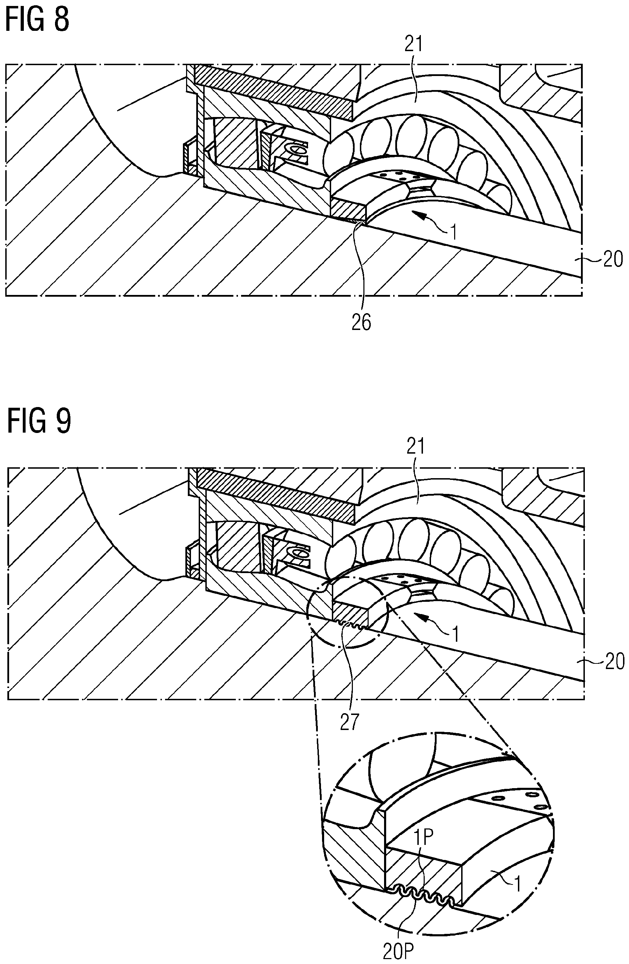

Figure 8 shows an embodiment in which a tapered sleeve 26 is placed between the inventive clamping ring 1 and the main shaft 20. The tapered sleeve optimizes the effect of the clamping ring 1 by reducing the clearance between shaft 20 and ring 1, thereby increasing the press-fit between shaft 20 and ring 1. The tapered sleeve 26, which can also be made of steel, can be secured to the clamping ring 1 by means of axially directed fasteners, for example.

Figure 9 shows an embodiment in which the inventive clamping ring 1 has a pattern 1P of parallel ridges and channels on its inner surface, to match a complementary pattern 20P formed about the main shaft 20. When the ring 1 is assembled about the main shaft, the ridges and channels engage, effectively prohibiting any axial displacement 1 of the clamping ring 1 relative to the shaft 20.

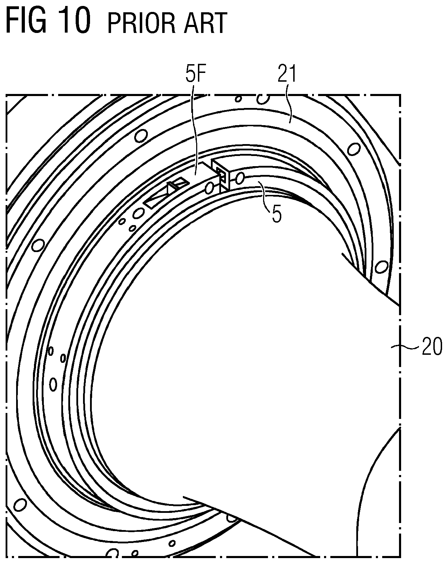

Figure 10 illustrates a split ring 5, used in the prior art to abut a bearing. The split ring 5 comprises two 180° half-rings, joined at each end by means of a transverse fastener 5F that is inserted through bores formed transversely in the ends of the half-rings 5R. However, it is essentially not possible to completely close the gap between the half-rings without deforming the joint. When such a split ring 5 is installed about the main shaft of a drivetrain with the intention of fixing the axial position of a bearing, the large axial and radial forces from the main shaft will eventually loosen the fastener 5F, and the split ring 5 can no longer maintain the axial position of the bearing.

Although the present invention has been disclosed in the form of preferred embodiments and variations thereon, it will be understood that numerous additional modifications and variations could be made thereto without departing from the scope of the invention. For example, instead of forming the main shaft to have an outwardly projecting shoulder as part of a bearing axial fixation means, the axial position of the bearing can be fixed by installing an instance of the inventive split clamping ring on each side of the bearing.

For the sake of clarity, it is to be understood that the use of "a" or "an" throughout this application does not exclude a plurality, and "comprising" does not exclude other steps or elements.

## Claims

1. A split clamping ring (1) for placing about a wind turbine drivetrain shaft (20), which split clamping ring (1) comprises
- a number of ring sections (1R), each with the form of a circular arc, and wherein adjacent ring sections (1R) comprise bores (104, 106) to receive a transverse threaded fastener (1F); and
- a number of spacer assemblies (1S), each with the form of a circular arc; and wherein each spacer assembly (1S) comprises an inner spacer part (11) and an outer spacer part (13) shaped to fit between opposing end faces (101, 103) of adjacent ring sections (1R) and to accommodate the shaft of a transverse threaded fastener (1F).

2. A split clamping ring according to the preceding claim, wherein a spacer part (11, 13) has an essentially trapezoidal shape.

3. A split clamping ring according to any of the preceding claims, wherein each ring section (1R) comprises an inner inclined side face (101) to match an inclined side face (110) of the inner spacer part (11).

4. A split clamping ring according to any of the preceding claims, wherein each ring section (1R) comprises an outer inclined side face (103) to match an inclined side face (130) of the outer spacer part (13).

5. A split clamping ring according to any of the preceding claims, wherein, after assembly of the split clamping ring (1), the ring sections (1R) and spacer assemblies (1S) collectively subtend an angle of 360°.

6. A split clamping ring according to any of the preceding claims, wherein each spacer assembly (1S) comprises a plurality of fasteners (11F) for joining the spacer parts (11, 13).

7. A split clamping ring according to the preceding claim, wherein each spacer assembly (1S) comprises four parallel fasteners (11F) for joining the spacer parts (11, 13).

8. A split clamping ring according to any of the preceding claims, wherein a ring section (1R) subtends an angle of at most 175°.

9. A split clamping ring according to any of the preceding claims, comprising at least two ring sections (1R) and the same number of spacer assemblies (1S).

10. A split clamping ring according to any of the preceding claims, wherein the ring sections (1R) and the spacer assembly (1S) are made of steel.

11. A main bearing unit (2) of a wind turbine drivetrain, comprising
- a number of bearings (21, 22) arranged about a main shaft (20) ;
- a housing (2H) arranged to enclose the bearings (21, 22) and the main shaft (20); and
- a split clamping ring (1) according to any of claims 1 to 10 mounted about the main shaft (20) to abut a bearing (21) .

12. A main bearing unit according to the preceding claim, further comprising
- a friction shim (25) arranged between the split clamping ring (1) and the main shaft (20); or
- a tapered sleeve (26) arranged between the split clamping ring (1) and the main shaft (20); or
- a threaded interface (27) between the split clamping ring (1) and the main shaft (20).

13. A method of assembling a main bearing unit (2) according to claim 11 or claim 12, which method comprises steps of
- arranging a number of bearings (21, 22) about the main shaft (20);
- arranging a housing (2H) about the main shaft (20) and the bearings (21, 22); and
- mounting a split clamping ring (1) according to any of claims 1 to 10 about the main shaft (20) to abut a bearing (21, 22).

14. A method according to the preceding claim, wherein a step of installing the split clamping ring (1) comprises
- placing ring sections (1R) of the split clamping ring (1) about the main shaft (20);
- assembling a spacer (1S) of the split clamping ring (1) between each pair of adjacent ring sections (1R);
- inserting a transverse threaded fastener (1F) through a ring section (1R), between the parts (11, 13) of the spacer assembly (1S), and into the adjacent ring section (1R); and
- tightening the transverse threaded fastener (1F) to a desired preload.

15. A method according to any of the preceding method claims, wherein the step of installing the split clamping ring (1) is performed after installation of the main bearing unit (2) in a wind turbine nacelle.
